# EUROPEAN PATENT SPECIFICATION

(11) **EP 2 422 075 B1**
(45) Date of publication and mention of the grant of the patent: **06.11.2019**
(21) Application number: 09788178.3
(22) Date of filing: 24.04.2009
(51) Int. Cl.: F03B 17/06

(54) **FLUID FLOW OPERATED POWER GENERATING SYSTEM**
FLUIDSTRÖMUNGSBETRIEBENES ENERGIEERZEUGUNGSSYSTEM
SYSTÈME GÉNÉRATEUR D'ÉNERGIE ACTIONNÉ PAR UN COURANT DE FLUIDE

(43) Date of publication of application: 29.02.2012
(73) Proprietor: Blue Motion Energy B.V., 3319 CH Dordrecht (NL)
(72) Inventor: Geutjes, Eric Herman, NL-3319 CH Dordrecht (NL); Schouten, Edwin Clemens, NL-3319 CH Dordrecht (NL)
(74) Representative: Hylarides, Paul Jacques
(86) International application number: PCT/NL2009/050225
(87) International publication number: WO 2010/123346

(56) References cited:
- WO-A-2008/050149
- JP-A- 62 055 469
- US-A- 1 489 624
- US-A- 4 203 702
- US-A- 4 279 569

## Description

The present invention relates to a fluid flow operated power generating system for generating electrical power. The invention also relates to a method of constructing a fluid flow operated power generating system and to the use of a fluid flow operated power generating system.

Electricity can be generated by using hydropower, i.e. the production of electrical power through use of a fluid (in most cases water) flowing along an electrical power generator. Most hydroelectric power comes from the potential energy of dammed water driving a water turbine and generator. Instead of potential energy one can also take advantage of the kinetic energy present in a water flow. For instance, in a run-of-the-river hydroelectric power station use is made of the natural flow of a river. Power stations of this type may be built in rivers with a consistent and steady flow, either natural or through the use of a large reservoir at the head of the river which then can provide a regulated steady flow for stations down the river. In another type of power station use is made of tidal energy. In this type of station the kinetic energy of water masses moving under the influence of the earth-moon gravity is used in order to power the generator(s). Tidal power generators have a particular low ecological impact and potentially are able to provide large amounts of energy.

In general the velocity of the water flow caused by the tidal forces produced, is relatively low, typically not more than several m/s. In order to operate the generator of a power station the velocity of the water should be as high as possible, so that conventionally tidal power stations are arrayed in high-velocity areas where natural tidal current flows are concentrated, for instance at entrances to bays and rivers or between land masses where water currents are concentrated.

However, it is not always possible to arrange the power stations in such high velocity areas. For instance, locally the water may be shallow so that the presence of power stations at the bottom of the water volume may impede shipping traffic. Another drawback is that the application of these known hydroelectric power stations is restricted to these high velocity areas, which may be far away from the locations where the electrical power is actually needed. Furthermore, constructing the power stations in high-velocity areas may prove difficult in view of the environmental conditions. Consequently, there is a demand for hydroelectric power stations that can be applied also outside the high velocity areas mentioned above. Furthermore, power stations presently in operation are able to generate electrical power

Document GB 2 434 407 A discloses a tidal wave power generator comprising a vertical axis turbine and flow guides shaped to ensure that the water rotates the turbine in one direction. The flow guides are formed by a number of side walls, upper walls and lower walls, which walls together form a plurality of funnels that are able to increase the pressure effecting the turbine. Both the turbine and the walls have been put on a solid concrete base in a frustum pyramid shape. The assembly of concrete base, turbine and walls is sunk under water. Since the assembly is formed as one unit, the handling thereof may be problematic in case the generator is to generate a high power. Consequently, by arranging the walls and turbine on a single base, the maximum size of the assembly and thereby the maximum power to be generated by the assembly is restricted. Furthermore, the angle between the flow guides of the tidal wave power generator disclosed in GB 2 434 407 A is large and this causes enormous turbulence so this power generator will have a very low efficiency.

The document US 1,489,624 shows a power generating system with a turbine disposed in the center of a star-arranged funnel system with fixedly installed funnel walls. It is an object of the present invention to provide an improved flow operated power generating system for generating electrical power and/or an improved method of constructing the same.

It is further object of the present invention to provide a power generating system that is capable of converting the kinetic energy of a fluid flow into electrical power in a more energy efficient way.

It is still a further object of the present invention to provide a tidal flow operated power generating system that is capable of generating more power than the prior systems.

At least one of the objects is achieved according to a first aspect of the present invention in a fluid flow operated power generating system for generating electrical power according to the features of claim 1.

By increasing the flow velocity in an effective manner the generated power can be increased equal to the cubed flow velocity.

The turbine support and the guiding elements may be arranged separately on one or more foundations at the bottom of the volume of water and hence the scale of the power generating system may be made much larger than the scale of the usual power generator stations. This makes it possible, for instance, to substantially increase the power that can be generated by the system. Since the guiding elements extend generally radially with respect to the turbine, the fluid is concentrated in the centre where the turbine may be arranged in order to give the fluid passing the turbine (and thereby driving it) a relatively high velocity. In a further embodiment the guiding elements should therefore be arranged in a star-like configuration and the turbine should be arranged centrally in this configuration.

In embodiments of the invention the guiding elements are generally straight. Furthermore, the angle between neighbouring guiding elements should be an acute angle in order to reduce turbulence. More specifically, the angle defined between neighbouring guiding elements is preferably smaller than 60 degrees, even more preferably smaller than 45 degrees or smaller than 30 degrees, to further reduce turbulence. Turbulence may cause the power generating efficiency of the turbine to drop considerably.

In other embodiments of the present invention a guiding element comprises a generally straight first guiding element part and a generally curved second guiding element part, the second guiding element part being situated close to the position of the turbine and being arranged to further increase the velocity of the fluid passing the turbine. This has a positive influence on the maximum power generated by the generator. Similarly to the embodiment wherein the guiding elements is straight along its entire length, the angle defined between neighbouring guiding elements should be an acute angle or, more preferably, smaller than 60, 45 or 30 degrees, with a view to reduce turbulence.

In an embodiment of the invention the guiding elements form one or more funnels to increase the flow velocity of the fluid passing the turbine. In an especially advantageous embodiment the guiding elements are formed by elongated dams constructed on top of the foundation at the bottom of the volume of water.

In an embodiment of the present invention the effective ratio of the length (L) of each of the guiding elements relative to the diameter (D) of the turbine is in a range of about 1 to about √h₂/v_{1,max}, wherein h is the depth of the volume of water and v is the original velocity of the fluid, i.e. the velocity without the presence of the guiding elements. If the length of the guiding elements increases, the damming up of the water (i.e. the local rise of the water level) caused by the presence of the guiding elements and the turbine is increased as well. The damming up of the water puts a limit to the efficiency of the system. The diameter of the turbine needs therefore to be increased as well to avoid the situation wherein the ratio exceeds √h₂/v_{1,max}. This avoids extensive raise of the water level and any counter-currents and side-currents to occur.

In an embodiment the height of the guiding elements is larger than the local depth of the volume of water added with the local raise of the water level due to the presence of the guiding elements. In this way the top of the guiding elements is always above the water level.

The portion of the guiding element facing the turbine may extend generally in line with or parallel with the tangent of the outer portion of each of the vanes of the turbine so that a relatively smooth transition between the guiding element and a vane can be accomplished. This has a positive effect on the efficiency of the system.

In a preferred embodiment the number of guiding elements is eight and the angle between consecutive guiding elements is about 45 degrees, depending on the flow velocity pattern two or more sidewalls can be left away.

In an embodiment the angle between consecutive guiding elements is essentially constant. Since in this embodiment the guiding elements are evenly distributed around the turbine, the power generation may be performed substantially independent of the (tidal) flow direction.

In an embodiment a guiding element is comprised of a plurality of prefabricated guiding sub-elements to be arranged in an abutting manner on the foundation. For instance, the sub-elements may be formed of caissons configured to float on the volume of water in a first mode of operation and to be sunk to the bottom of the volume of water in a second mode of operation. In this way the guiding elements may be constructed and arranged at the bottom in a cost-effective, fast and reliable manner.

According to another aspect of the invention on or more objects are achieved in a method of constructing a fluid flow operated power generating system, the method comprising:
- arranging a turbine support on a foundation at the bottom of a volume of water, in particular a sea or river;
- mounting a turbine to the turbine support, the turbine comprising a rotor having a plurality of vanes, the rotor extending generally vertically;
- arranging a plurality of fluid guiding elements on a foundation at the bottom of the volume of water, the guiding elements being arranged in a pattern configured to increase the flow velocity of the fluid passing the turbine.

Further advantages, characteristics and details of the present invention will become apparent when reading the following description of several embodiments thereof. In the description reference is made to the annexed drawings, in which show:
Figure 1 a schematic top view of an embodiment of the invention, applied in a river;
Figure 2 a schematic top view of a second embodiment of the invention, arranged at the bottom of the sea;
Figure 3 a schematic top view of a third embodiment of the invention;
Figure 4 a side view in perspective of an embodiment of a turbine according to an embodiment of the invention.

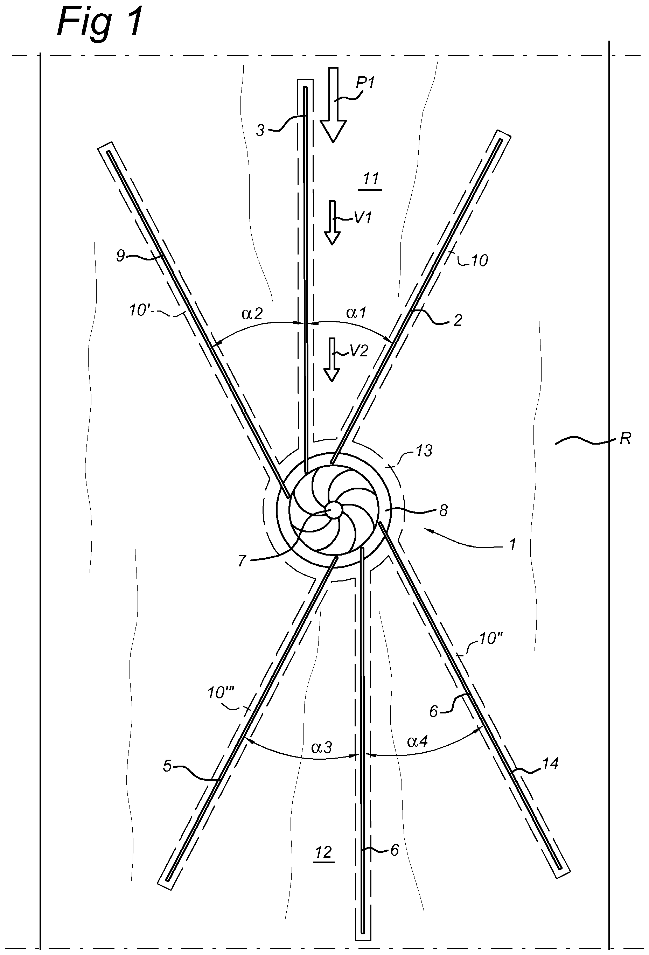

In figure 1 a first embodiment of a fluid operated power generating system 1 according to the invention is illustrated. Figure 1 shows a river (R) in the middle of which a power generating system 1 is arranged. The direction of the water current in the river is denoted by P₁. On foundations 10-10"' on the river bed a plurality of guiding elements 2,3,5,6,9,14 in the shape of dams are arranged. The first, second and third dam 2,3 and 9 are arranged upstream of the central turbine 7, while the fourth, fifth and sixth dams 5, 6,14 are arranged downstream of the turbine 7. The guiding elements 2,3,5,6 are shown to have generally straight shape, but other shapes are possible as well. The upstream guiding elements 2,3,9 define a first set of funnels 11 in which the water streaming down the river can be received. Similarly, the downstream guiding elements 5, 6,14 define a second set of funnels 12 at the downstream end of the system 1 for discharging the water that has passed the turbine 7.

The guiding elements are arranged so that the angle (α₁) between the first and second guiding element 2,3, the angle (α₂) between the second and third guiding element 3,9, the angle (α₃) between the fourth and fifth guiding element 5,6 and/or the angle the angle (α₄) between the fifth and sixth guiding element 6,14 is smaller than 60 degrees in order to reduce turbulence of the water flowing along the guiding elements. In the shown embodiments the angles α_{1,} α₂, α₃, and α₄ are substantially equal (about 30 degrees). In other embodiments one or more of the angles may take a different value. The specific arrangement of the guiding elements causes the velocity (v₂) at the exit of the funnel 11 to be considerably larger than the velocity (v₁) at the entrance thereof. This has a positive effect on the maximum power that can be generated by the turbine 7.

The amount of fluid entering the entrance of the funnel 11 formed by guiding elements 2,3 depends on the angle α between the dams. When the angle α is large, for instance between 60 and 90 degrees, no substantial increase of the velocity of the flow may be accomplished. However, when the angle α between the guiding elements is smaller than 60 degrees, or, preferably, smaller than 45 degrees, the turbulence will be reduced and the velocity increase may be substantial. When the angle between the guiding elements is as small as about 30 degrees, practically no turbulence will occur.

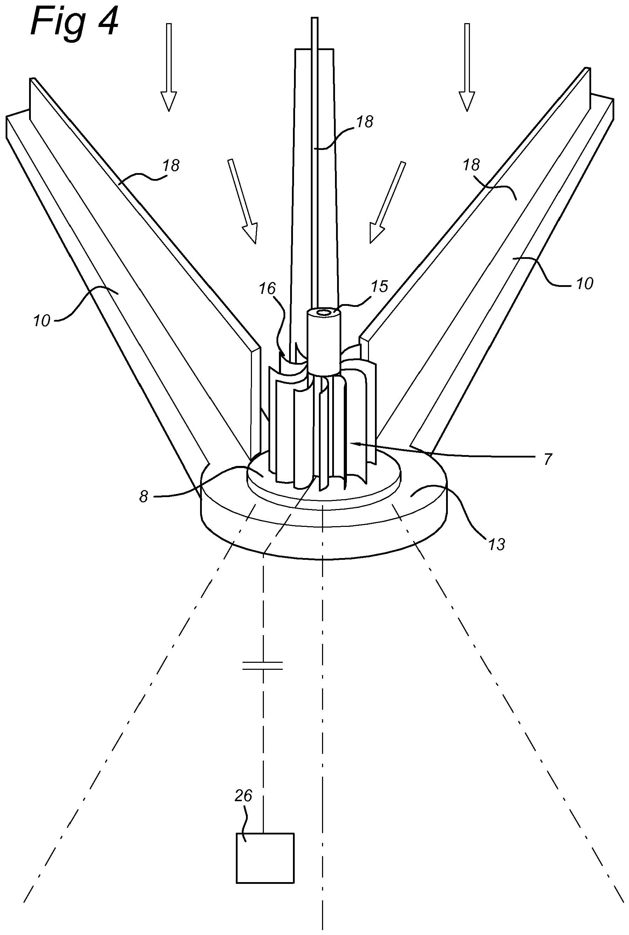

As mentioned earlier, in the centre between the upstream guiding elements 2,3 and the downstream elements 5, 6 a turbine 7 is positioned. The turbine 7 is mounted to a turbine support 8 that is configured to be arranged on a foundation 13 and/or supported on the guiding element (cf. broken lines) present on the river bed. Referring to figure 4, the turbine 7 comprises a vertical rotor 16 preferably a cylindrical rotor, provided with a number of curved vanes. The rotor 16 is coupled to a generator (shown schematically in figure 4) that is capable of converting mechanical energy (rotation of the rotor 16) into electrical energy. The generated electrical energy is transported to a distribution station 26 for distribution to the end users.

The velocity (v₂) at the exit of the upstream funnel 11 can be calculated as being the velocity (v₁) at the entrance of the funnel times the ratio of the flow area (A₁) at the entrance of the funnel and the flow area A₂ at the exit of the funnel, minus losses by turbulence, counter currents and side currents . Furthermore, the power that can be generated with a turbine in this configuration may be approximated as P= 1/2ηρAv³, wherein η is the efficiency of the turbine, ρ is the density of the fluid (i.e. the density of water), A is the effective rotor surface of the turbine and v is the velocity of the fluid passing the turbine. Suppose the rotor surface is 100 m², the angle α between the first and second guiding elements is 45 degrees, the flow velocity is 0,45 m/s after losses by counter currents and side currents , the area at the exit of the funnel 11 is 50 m² and the efficiency is about 70%, then the power generating system is capable of generating about 70 MW.

When the river is in fact an estuary, the direction of the flow in the river or sea may be reversed as result of tidal changes. When the direction is reversed, the fourth, fifth and sixth elements 5, 6, 14 will perform a similar function as the first, second and third guiding elements 3, 4, 9 in the situation described above. The fourth, fifth and sixth guiding elements 5, 6, 14 cause an increase of the velocity of the flow passing the turbine, thereby increasing the maximum electrical power that can be generated. In situations where no reversal of the flow takes place, the opposite guiding elements may be dispensed with. In situations where no side flow takes place, the side guiding elements may be dispensed with.

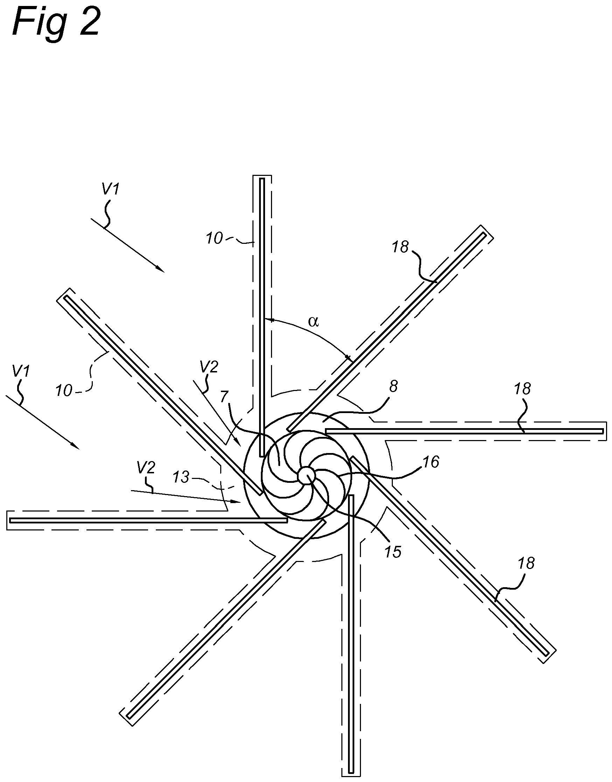

Figure 2 shows another embodiment of the present invention. In this embodiment the power generating system is arranged at the bottom of the sea. The turbine 7 is mounted to support 8 and support 8 is arranged on the foundation 13 provided at the bottom of the sea. Centred around the turbine a plurality of elongated dams 18 extend in a generally radial direction. The elongated dams 18 are placed on individual foundations 10 (not shown in figure 2). Dams 18 extend from the sea bottom to a height slightly above sea level, i.e. a height larger than the local depth of the sea added with a predetermined amount of extra height due to the fact that the water level may be raised locally because of the presence of the dams.

In the shown embodiment eight dams 18 have been arranged at the sea bed which dams have been evenly distributed in a star- like configuration around the central turbine. The angle α between neighbouring dams 18 therefore is about 45 degrees. The number of dams 18 may be chosen to be smaller or larger, depending on the circumstances.

Similar to the embodiment described in connection with Figure 1, the arrangement of the dams 18 is such that the velocity of the flow at the location of the turbine is much larger than the velocity at the entrance of the funnels formed by the dams 18. However, due to the specific configuration, the increase of the flow velocity is essentially independent of the direction of the flow. Whereas the first embodiment is configured to cope with a stream flowing in one or two (opposite) directions, the present embodiment is therefore able to generate power substantially independently of the direction of the tidal current.

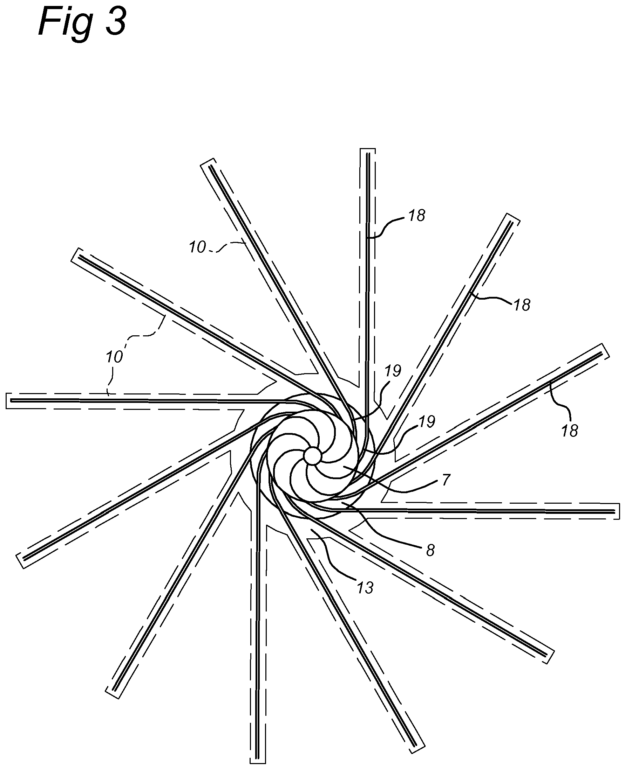

Figure 3 shows a further embodiment of the present invention, based on the second embodiment described in connection with Figure 2. In the third embodiment the generally straight dams 18 have been given a curved part 19 close to the turbine. The curved parts of the dams have been provided to locally change the direction of the flow so that it better is adapted to the shape of the vanes of the turbine. This has a positive effect on the efficiency (i.e. on the efficiency coefficient η) of the turbine.

The inventors found that preferably the effective ratio of the length (L) of each of the guiding elements relative to the diameter (D) of the turbine should be in a range of 1 to about √h₂/v_{1 max}, wherein h is the depth of the volume of water and v is the original velocity of the fluid. In most situations in practice the effective ratio thus defined should be lower than about 8. The exact value of the ratio depends amongst others on the depth of the volume of water and the predominant average velocity of the tidal flow. For instance, in very deep water (depth more than 40 meters) and a relatively low velocity, the ratio should be about 8. The ratio may have to be reduced when the velocity of the flow is larger. In Table 1 below an overview is given of some preferred ratios of the length of the dam relative to the diameter of the turbine for several sea conditions and for several sea depths.

**Table 1 Overview of effective ratio's as function of velocity and depth**

| Max L/D | Low sea or river velocity | Medium sea or river velocity | High sea or river velocity |
|---|---|---|---|
| | v = 1 m/s | v = 2 m/s | v = 3 m/s |
| Shallow water h=5m | 2,7 | 1,4 | 1 |
| Medium shallow h = 10 m | 4 | 2 | 1,3 |
| Deep water h = 20 m | 5,5 | 2,7 | 2 |
| Very deep water h = 40 m | 7,7 | 4 | 2,6 |

The guiding elements or, more specifically, the dams, may be constructed in various ways. For instance, the material of the elements such as steel or concrete may be deposited on the (foundations at the) bottom of the sea, for instance by making use of a suitable hoisting equipment. In another example the guiding elements are formed by a number of sub-elements that can be arranged one behind the other at the bottom of the sea. In a particular advantageous embodiment the sub-elements are prefabricated (concrete) elements. The elements are fabricated on land. Since in a first mode of operation the elements can float on the water, they are towed to the location at sea (or at the river) where the power generating system is to be arranged. Then, in a second mode of operation, the elements are caused to sink and are placed one behind the other at the bottom. A combination of both examples is possible as well. For instance the floatable sub-elements may be arranged at the (foundation provided on the) sea bed, after which they are filled with material. For smaller configurations the total construction consisting out of a foundation inclusive walls can be fabricated on land and sunk at the bottom of the sea (or at the bottom of the river)

In general, the height of the dams is such that the top of the dams always extends above the maximum level of the water so as to avoid any unwanted flows of water due to the pressure differences caused by the presence of the dams.

In particularly preferred embodiments the length of each of the guiding elements is between 5 and 55 m for shallow water with the depth of about 7 m or less, between about 15 m and 80 m for medium shallow water with a depth of about 7-15 m, between about 40 m and 220 m for deep water with a depth of about 15-30 m and/or about between 120 m and 620 m for very deep water with a depth of 30 m or more.

Although the invention has been described with reference to specific embodiments thereof, it will be appreciated that the invention is not limited to these embodiments and changes and modifications to the power generating system and the method described therein may be made without departing from the scope of the invention. The rights applied for are defined by the following claims.

## Claims

1. A fluid flow operated power generating system (1) for generating electrical power, the system comprising:
a turbine support (8);
a turbine (7) mounted to the turbine support and comprising an essentially vertical rotor having a plurality of vanes;
a plurality of fluid guiding elements configured to increase the generated power through increasing the flow velocity of the fluid passing the turbine;
whereby the turbine support (8) is arranged or configured to be arranged at a foundation (13;10) at the bottom of a volume of water, in particular a sea or river;
the guiding elements are formed by elongated dams (2,3,9,5,6,14,18) extending generally radially outward in a star-like configuration with respect to the turbine and the turbine is arranged centrally in this configuration, wherein the angle (α) between neighbouring guiding elements is smaller than 45 degrees for increasing the flow velocity essentially independently of the direction of the flow.
the guiding elements are constructed on top of a foundation on the bottom of the volume of water;
**characterized in that** the height of the dams is such that the top of the dams extends above the maximum level of the water;
the dams are configured to form one or more funnels to increase the flow velocity of the fluid, the funnels being open at their upper side, and **in that**;
a guiding element is comprised of a plurality of prefabricated guiding sub-elements to be arranged in an abutting manner on the foundation.

2. System as claimed in claim 1, wherein the sub-elements are formed of caissons configured to float on the volume of water in a first mode of operation and to be sunk to the bottom of the volume of water in a second mode of operation.

3. System as claimed in claim 1 or 2, wherein the dams partly extend below the water level and partly above the water level so as to collect combined tidal energy and wave energy, preferably the combined tidal energy, wave energy and wind energy or wherein the height of the dams is larger than the local depth of the volume of water added with the local raise of the water.

4. System as claimed in claim 1, 2 or 3, wherein the dams are made by deposition of material such as steel or concrete on the bottom of the volume of water.

5. System as claimed in any of the preceding claims, wherein the height of the dams is such that one or more open funnels are formed to increase the flow velocity and water level of the fluid passing the turbine, in order to collect combined tidal, wave and wind energy and/or wherein the dams are configured to form funnels configured to increase both the flow velocity and the wave height.

6. System as claimed in any of the preceding claims, wherein the length of each of the dams is between 5 and 55 m for shallow water with the depth of about 7 m or less, between about 15 m and 80 m for medium shallow water with a depth of about 7-15 m, between about 40 m and 220 m for deep water with a depth of about 15-30 m and/or about between 120 m and 620 m for very deep water with a depth of 30 m or more; and/or wherein the length of each of the dams is between about 15 m and 30 m for medium shallow water with a depth of about 7-15 m, between about 40 m and 40 m for deep water with a depth of about 15-30 m and/or about between 50-100 m for very deep water with a depth of 30 m or more.

7. System as claimed in claim 1, wherein the guiding elements are generally straight and wherein the angle between neighbouring guiding elements is an acute angle in order to reduce turbulence, and/or wherein the angle (α) defined between neighbouring guiding elements is preferably smaller than 30 degrees, to reduce turbulence and/or wherein a guiding element extends in a generally straight line towards the turbine, and/or wherein the guiding element comprises a generally straight first guiding element part and a generally curved second guiding element part, the second guiding element part being situated close to the position of the turbine and being arranged to further increase the velocity of the fluid passing the turbine.

8. System as claimed in any of the preceding claims, wherein the effective ratio of the length (L) of each of the guiding elements relative to the diameter (D) of the turbine is in a range of about 1 to about √h₂/v_{1 max}, wherein h is the depth of the volume of water and v is the original velocity of the fluid, wherein the effective ratio of the length (L) of each of the guiding elements relative to the diameter (D) of the turbine preferably is lower than about 8.

9. System as claimed in any of the preceding claims, wherein the fluid flow is a marine tidal flow, preferably a marine tidal flow and a marine wave, and the turbine support is arranged at the sea bed, and/or wherein the fluid flow is a river flow and the turbine support is arranged on the riverbed; and/or wherein the system comprises an electrical generator coupled to the rotor of the turbine so as to convert the mechanical energy of the rotating rotor into electrical energy and/or wherein the portion of the guiding element facing the turbine extends generally in line with or parallel with the tangent of the outer portion of the vanes of the turbine.

10. System as claimed in any of the preceding claims, wherein the angle between consecutive guiding elements is constant.

11. System as claimed in any of the preceding claims, wherein the guiding elements are positioned stationary relative to the bottom of the volume of water and/or relative to the turbine support.

12. Combination of a system as claimed in any of the preceding claims and a foundation to be provided at the bottom of the volume of water, wherein the turbine support and/or the plurality of fluid guiding elements is mountable to the foundation.

13. Method of constructing a fluid flow operated power generating system (1) as defined in any of the claims 1-11, for generating electrical power, the method comprising:
arranging a turbine support (8) on a foundation at the bottom of a volume of water, in particular a sea or river;
mounting a turbine (7) to the turbine support, the turbine comprising a rotor having a plurality of vanes, the rotor extending generally vertically;
arranging a plurality of dams (2, 3, 9, 5, 6, 14, 18) on a foundation at the bottom of the volume of water such that the top of the dams extends above the maximum level of water, the dams being arranged to extend generally radially outward in a star-like configuration with respect to the turbine and the turbine is arranged centrally in this configuration, wherein the angle (α) between neighbouring guiding elements is smaller than 45 degrees for increasing the flow velocity essentially independently of the direction of the flow. so as to increase the generated power through increasing velocity of the fluid passing the turbine and to form one or more funnels to increase the flow velocity of the fluid, the funnels being open at their upper side.
wherein a guiding element is comprised of a plurality of prefabricated guiding sub-elements to be arranged in an abutting manner on the foundation, the sub-elements preferably being formed of caissons configured to float on the volume of water in a first mode of operation and to be sunk to the bottom of the volume of water in a second mode of operation.

14. Method of claim 13, comprising arranging dams extending partly below the water level and partly above the water level so as to collect combined tidal energy, wave energy and wind energy.

15. Use of the system as claimed in any of claims 1-11.

## Patentansprüche

1. Fluidströmungsbetriebenes energieerzeugendes System (1) zum Erzeugen von elektrischer Energie, wobei das System umfasst:
einen Turbinenträger (8);
eine Turbine (7), welche auf dem Turbinenträger montiert ist, und welche einen im Wesentlichen vertikalen Rotor umfasst, welcher eine Vielzahl von Flügeln aufweist;
eine Vielzahl von Fluid-Führungselementen, welche konfiguriert sind, um die erzeugte Energie durch Erhöhen der Strömungsgeschwindigkeit des Fluids, welches durch die Turbine passiert, zu erhöhen; wobei der
Turbinenträger (8) angeordnet ist oder konfiguriert ist, um an einem Fundament (13; 10) an dem Boden von einem Wasservolumen, insbesondere von einem Meer oder einem Fluss, angeordnet zu werden;
wobei die Führungselemente durch längliche Dämme (2, 3, 9, 5, 6, 14, 18) gebildet werden, welche sich im Wesentlichen radial nach außen in einer sternähnlichen Konfiguration hinsichtlich der Turbine erstrecken, und wobei die Turbine in dieser Konfiguration zentral angeordnet ist, wobei der Winkel (α) zwischen benachbarten Führungselementen kleiner ist als 45 Grad zum Erhöhen der Strömungsgeschwindigkeit im Wesentlichen unabhängig von der Richtung der Strömung,
wobei die Führungselemente auf einem Fundament auf dem Boden von dem Wasservolumen errichtet sind;
**dadurch gekennzeichnet, dass**
die Höhe der Dämme derartig ist, dass sich die Oberseite der Dämme oberhalb von dem maximalen Wasserspiegel erstreckt;
die Dämme konfiguriert sind, um einen oder mehrere Trichter zu bilden, um die Strömungsgeschwindigkeit des Fluids zu erhöhen, wobei die Trichter an ihrer oberen Seite offen sind, und dadurch, dass
ein Führungselement eine Vielzahl von vorgefertigten Führungs-Subelementen umfasst, welche auf dem Fundament in einer anliegenden Art und Weise anzuordnen sind.

2. System gemäß Anspruch 1, wobei die Subelemente aus Abläufen gebildet sind, welche konfiguriert sind, um auf dem Wasservolumen in einem ersten Betriebsmodus zu schwimmen, und um auf den Boden des Wasservolumens in einem zweiten Betriebsmodus versenkt zu werden.

3. System gemäß Anspruch 1 oder 2, wobei sich die Dämme teilweise unterhalb des Wasserspiegels und teilweise oberhalb des Wasserspiegels erstrecken, um so kombinierte Gezeitenenergie und Wellenenergie zu sammeln, vorzugsweise die kombinierte Gezeitenenergie, Wellenenergie und Windenergie, oder wobei die Höhe der Dämme größer ist als die lokale Tiefe von dem Wasservolumen, welches mit dem lokalen Anstieg des Wassers hinzugefügt wird.

4. System gemäß Anspruch 1, 2 oder 3, wobei die Dämme durch Ablagerung von Material, wie beispielsweise Stahl oder Beton, auf dem Boden des Wasservolumens hergestellt sind.

5. System gemäß irgendeinem der vorherigen Ansprüche, wobei die Höhe von den Dämmen derartig ist, dass eine oder mehrere offene Trichter gebildet werden, um die Strömungsgeschwindigkeit und den Wasserspiegel von dem Fluid, welches durch die Turbine passiert, zu erhöhen, um kombinierte Gezeiten-, Wellen- und Windenergie zu sammeln, und/oder wobei die Dämme konfiguriert sind, um Trichter zu bilden, welche konfiguriert sind, um sowohl die Strömungsgeschwindigkeit als auch die Wellenhöhe zu erhöhen.

6. System gemäß irgendeinem der vorhergehenden Ansprüche, wobei die Länge von jedem von den Dämmen zwischen 5 und 55 m für flaches Wasser mit einer Tiefe von ungefähr 7 m oder weniger beträgt, zwischen ungefähr 15 m und 80 m für mitteltiefes Wasser mit einer Tiefe von ungefähr 7 - 15 m, zwischen ungefähr 40 m und 220 m für tiefes Wasser mit einer Tiefe von ungefähr 15 - 30 m, und/oder ungefähr zwischen 120 m und 620 m für sehr tiefes Wasser mit einer Tiefe von 30 m oder mehr; und/oder wobei die Länge von jedem von den Dämmen zwischen ungefähr 15 m und 30 m für mitteltiefes Wasser mit einer Tiefe von ungefähr 7 - 15 m, zwischen ungefähr 40 m und 40 m für tiefes Wasser mit einer Tiefe von ungefähr 15 - 30 m, und/oder ungefähr zwischen 50 - 100 m für sehr tiefes Wasser mit einer Tiefe von 30 m oder mehr beträgt.

7. System gemäß Anspruch 1, wobei die Führungselemente im allgemeinen gerade sind, und wobei der Winkel zwischen benachbarten Führungselementen ein spitzer Winkel ist, um so Verwirbelungen zu reduzieren, und/oder wobei der Winkel (α), welcher zwischen benachbarten Führungselementen definiert ist, vorzugsweise kleiner ist als 30 Grad, um Verwirbelungen zu reduzieren, und/oder wobei sich ein Führungselement in einer im allgemeinen geraden Linie in Richtung zu der Turbine erstreckt, und/oder wobei das Führungselement einen im allgemeinen geraden ersten Teil des Führungselements und einem im allgemeinen gekrümmten zweiten Teil des Führungselements umfasst, wobei der zweite Teil des Führungselements dicht an der Position von der Turbine platziert ist und angeordnet ist, um die Geschwindigkeit des Fluids, welches durch die Turbine passiert, weiter zu erhöhen.

8. System gemäß irgendeinem der vorhergehenden Ansprüche, wobei das effektive Verhältnis der Länge (L) von jedem von den Führungselementen relativ zu dem Durchmesser (D) von der Turbine in einem Bereich von ungefähr 1 bis ungefähr √h₂/v_{1 max} liegt, wobei h die Tiefe des Wasservolumens ist, und v die ursprüngliche Fluidgeschwindigkeit ist, wobei das effektive Verhältnis von der Länge (L) von jedem von den Führungselementen relativ zu dem Durchmesser (D) von der Turbine vorzugsweise niedriger als ungefähr 8 ist.

9. System gemäß irgendeinem der vorhergehenden Ansprüche, wobei die Fluidströmung eine marine Gezeitenströmung ist, vorzugsweise eine marine Gezeitenströmung und eine marine Welle, und wobei der Turbinenträger auf dem Meeresboden angeordnet ist, und/oder wobei die Fluidströmung einer Flussströmung ist und der Turbinenträger auf dem Flussbett angeordnet ist; und/oder wobei das System einen elektrischen Generator umfasst, welcher mit dem Rotor von der Turbine gekoppelt ist, um so die mechanische Energie von dem drehenden Rotor in elektrische Energie umzuwandeln, und/oder wobei der Abschnitt von dem Führungselement, welcher der Turbine gegenüberliegt, sich im allgemeinen In-Line mit oder parallel zu der Tangente von dem äußeren Abschnitt der Flügel von der Turbine erstreckt.

10. System gemäß irgendeinem der vorhergehenden Ansprüche, wobei der Winkel zwischen aufeinanderfolgenden Führungselementen konstant ist.

11. System gemäß irgendeinem der vorhergehenden Ansprüche, wobei die Führungselemente stationär relativ zu dem Boden des Wasservolumens und/oder relativ zu dem Turbinenträger positioniert sind.

12. Kombination aus einem System, wie in irgendeinem der vorhergehenden Ansprüche beansprucht, und einem Fundament, welches auf dem Boden des Wasservolumens vorzusehen ist, wobei der Turbinenträger und/oder die Vielzahl von Fluid-Führungselementen auf dem Fundament montierbar ist.

13. Verfahren zum Konstruieren eines durch Fluidströmungsbetriebenen energieerzeugenden Systems (1), wie in irgendeinem der Ansprüche 1 - 11 definiert, zum Erzeugen von elektrischer Energie, wobei das Verfahren umfasst:
Anordnen eines Turbinenträgers (8) auf einem Fundament an dem Boden von einem Wasservolumen, insbesondere von einem Meer oder einem Fluss;
Montieren einer Turbine (7) an einen Turbinenträger, wobei die Turbine einen Rotor umfasst, welcher eine Vielzahl von Flügeln aufweist, wobei sich der Rotor im allgemeinen vertikal erstreckt;
Anordnen einer Vielzahl von Dämmen (2, 3, 9, 5, 6, 14, 18) auf einem Fundament an dem Boden des Wasservolumens, so dass sich die obere Seite der Dämme oberhalb von dem maximalen Wasserspiegel erstreckt, wobei die Dämme angeordnet sind, um sich im Wesentlichen radial nach außen in einer sternähnlichen Konfiguration hinsichtlich der Turbine zu erstrecken, und wobei die Turbine in dieser Konfiguration zentral angeordnet ist, wobei der Winkel (α) zwischen benachbarten Führungselementen kleiner ist als 45° zum Erhöhen der Strömungsgeschwindigkeit im Wesentlichen unabhängig von der Richtung der Strömung, um so die erzeugte Energie zu erhöhen durch Erhöhen der Geschwindigkeit des Fluids, welches durch die Turbine passiert, und um einen oder mehrere Trichter zu bilden, um die Strömungsgeschwindigkeit des Fluids zu erhöhen, wobei die Trichter an ihrer oberen Seite offen sind,
wobei ein Führungselement eine Vielzahl von vorgefertigten Führungs-Subelementen umfasst, welche in einer anliegenden Art und Weise auf dem Fundament anzuordnen sind, wobei die Subelemente vorzugsweise aus Abläufen gebildet sind, welche konfiguriert sind, um auf dem Wasservolumen in einem ersten Betriebsmodus zu schwimmen, und um auf den Boden des Wasservolumens in einem zweiten Betriebsmodus versenkt zu werden.

14. Verfahren gemäß Anspruch 13, welches einen Anordnen von Dämmen umfasst, welche sich teilweise unterhalb des Wasserspiegels und teilweise oberhalb des Wasserspiegels erstrecken, um so kombinierte Gezeitenenergie, Wellenenergie und Windenergie zu sammeln.

15. Verwendung des Systems, wie in irgendeinem der Ansprüche 1 - 11 beansprucht.

## Revendications

1. Dispositif de production d'énergie activé par courant de fluide (1) afin de produire de l'énergie électrique, le dispositif comprenant :
un support de turbine (8) ;
une turbine (7) montée sur le support de turbine et comprenant un rotor sensiblement vertical comportant une pluralité d'aubes ;
une pluralité d'éléments de guidage de fluide configurés de manière à augmenter l'énergie produite en augmentant la vitesse d'écoulement du fluide passant dans la turbine ;
de telle sorte que le support de turbine (8) est agencé ou configuré de manière à être agencé au niveau d'une fondation (13 ; 10) au fond d'un plan d'eau, en particulier, d'une mer ou d'un fleuve ;
les éléments de guidage sont formés par les barrages allongés (2, 3, 9, 5, 6, 14, 18) s'étendant sensiblement radialement vers l'extérieur en une configuration en forme d'étoile par rapport à la turbine, et la turbine est agencée de manière centrale dans cette configuration, dans lequel l'angle (α) entre des éléments de guidage voisins est inférieur à 45 degrés afin d'augmenter la vitesse d'écoulement sensiblement indépendamment de la direction de l'écoulement.
les éléments de guidage sont construits au-dessus d'une fondation sur le fond du plan d'eau ;
**caractérisé en ce que** :
la hauteur des barrages est telle que la partie supérieure des barrages s'étend au-dessus du niveau maximum de l'eau ;
les barrages sont configurés de manière à former un ou plusieurs entonnoirs afin d'augmenter la vitesse d'écoulement du fluide, les entonnoirs étant ouverts au niveau de leur face supérieure, et **en ce que** :
un élément de guidage est composé d'une pluralité d'éléments de guidage secondaires préfabriqués à agencer d'une manière à venir en butée sur la fondation.

2. Dispositif selon la revendication 1, dans lequel les éléments secondaires sont formés de caissons configurés de manière à flotter sur le plan d'eau dans un premier mode de fonctionnement et à être immergés au fond du plan d'eau dans un second mode de fonctionnement.

3. Dispositif selon la revendication 1 ou 2, dans lequel les barrages s'étendent partiellement au-dessous du niveau de l'eau et partiellement au-dessus du niveau de l'eau de manière à collecter l'énergie de la marée et l'énergie des vagues combinées, de préférence, l'énergie de la marée, l'énergie des vague et l'énergie éolienne combinées ou dans lequel la hauteur des barrages est supérieure à la profondeur locale du plan d'eau additionnée à l'élévation locale de l'eau.

4. Dispositif selon la revendication 1, 2 ou 3, dans lequel les barrages sont réalisés par le dépôt de matériau tel que de l'acier ou du béton sur le fond du plan d'eau.

5. Dispositif selon l'une quelconque des revendications précédentes, dans lequel la hauteur des barrages est telle qu'un ou plusieurs entonnoirs ouverts sont formés de manière à augmenter la vitesse d'écoulement et le niveau d'eau du fluide passant par la turbine, dans le but de collecter les énergies de la marée, des vagues et éolienne combinées et/ou dans lequel les barrages sont configurés de manière à former des entonnoirs configurés afin d'augmenter à la fois la vitesse d'écoulement et la hauteur de vague.

6. Dispositif selon l'une quelconque des revendications précédentes, dans lequel la longueur de chacun des barrages est comprise entre 5 et 55 m pour de l'eau peu profonde avec une profondeur inférieure ou égale à 7 m environ, entre 15 m et 80 m environ pour de l'eau moyennement peu profonde avec une profondeur de 7 à 15 m environ, entre 40 m et 220 m environ pour de l'eau profonde avec une profondeur de 15 à 30 m environ et/ou entre 120 m et 620 m environ pour de l'eau très profonde avec une profondeur supérieure ou égale à 30 m ; et/ou dans lequel la longueur de chacun des barrages est comprise entre 15 m et 30 m environ pour de l'eau moyennement peu profonde avec une profondeur de 7 à 15 m environ, entre 40 m et 40 m environ pour de l'eau profonde avec une profondeur de 15 à 30 m environ et/ou entre 50 et 100 m environ pour de l'eau très profonde avec une profondeur supérieure ou égale à 30 m.

7. Dispositif selon la revendication 1, dans lequel les éléments de guidage sont sensiblement droits et dans lequel l'angle entre des éléments de guidage voisins est un angle aigu dans le but de réduire la turbulence, et/ou dans lequel l'angle (a) défini entre les éléments de guidage voisins est de préférence inférieur à 30 degrés, afin de réduire la turbulence et/ou dans lequel un élément de guidage s'étend suivant une ligne sensiblement droite vers la turbine, et/ou dans lequel l'élément de guidage comprend une première partie d'élément de guidage sensiblement droite et une seconde partie d'élément de guidage sensiblement incurvée, la seconde partie d'élément de guidage étant située à proximité de l'emplacement de la turbine et étant agencée afin d'augmenter davantage la vitesse du fluide passant par la turbine.

8. Dispositif selon l'une quelconque des revendications précédentes, dans lequel le rapport efficace de la longueur (L) de chacun des éléments de guidage par rapport au diamètre (D) de la turbine est compris dans une plage de 1 environ à √h2/v1max environ, dans lequel h est la profondeur du plan d'eau et v est la vitesse initiale du fluide, dans lequel le rapport efficace de la longueur (L) de chacun des éléments de guidage par rapport au diamètre (D) de la turbine est, de préférence, inférieur à 8 environ.

9. Dispositif selon l'une quelconque des revendications précédentes, dans lequel l'écoulement de fluide est un écoulement périodique marin, de préférence, un écoulement périodique marin et une vague marine, et le support de turbine est agencé au fond de la mer, et/ou dans lequel l'écoulement de fluide est un écoulement de rivière et le support de turbine est agencé sur le lit de la rivière ; et/ou dans lequel le dispositif comprend un générateur électrique couplé au rotor de la turbine afin de transformer l'énergie mécanique du rotor tournant en énergie électrique et/ou dans lequel la partie de l'élément de guidage faisant face à la turbine s'étend sensiblement dans l'alignement de la tangente de la partie externe des aubes de la turbine, ou parallèlement à celle-ci.

10. Dispositif selon l'une quelconque des revendications précédentes, dans lequel l'angle entre des éléments de guidage consécutifs est constant.

11. Dispositif selon l'une quelconque des revendications précédentes, dans lequel les éléments de guidage sont positionnés à demeure par rapport au fond du plan d'eau et/ou par rapport au support de turbine.

12. Association d'un dispositif selon l'une quelconque des revendications précédentes et d'une fondation à former sur le fond du plan d'eau, dans laquelle le support de turbine et/ou la pluralité d'éléments de guidage de fluide peuvent être montés sur la fondation.

13. Procédé de construction d'un dispositif de production d'énergie activé par courant de fluide (1) selon l'une quelconque des revendications 1 à 11, afin de produire de l'énergie électrique, le procédé comprenant :
l'agencement d'un support de turbine (8) sur une fondation au fond d'un plan d'eau, en particulier, d'une mer ou d'une rivière ;
le montage d'une turbine (7) sur le support de turbine, la turbine comprenant un rotor comportant une pluralité d'aubes, le rotor s'étendant sensiblement verticalement ;
l'agencement d'une pluralité de barrages (2, 3, 9, 5, 6, 14, 18) sur une fondation au fond du plan d'eau de telle sorte que le haut des barrages s'étend au-dessus du niveau maximum de l'eau, les barrages étant agencés de manière à s'étendre sensiblement radialement vers l'extérieur dans une configuration en forme d'étoile par rapport à la turbine et la turbine est agencé de manière centrale dans cette configuration, dans lequel l'angle (a) entre des éléments de guidage voisins est inférieur à 45 degrés afin d'augmenter la vitesse d'écoulement sensiblement indépendamment de la direction de l'écoulement, de manière à augmenter l'énergie produite en augmentant la vitesse du fluide passant par la turbine, et de former un ou plusieurs entonnoirs afin d'augmenter la vitesse d'écoulement du fluide, les entonnoirs étant ouverts au niveau de leur face supérieure.
dans lequel un élément de guidage est composé d'une pluralité d'éléments de guidage secondaires préfabriqués à agencer de manière à venir en butée sur la fondation, les éléments secondaires étant, de préférence, formés de caissons configurés de manière à flotter sur le plan d'eau dans un premier mode de fonctionnement et à être immergés au fond du plan d'eau dans un second mode de fonctionnement.

14. Procédé selon la revendication 13, comprenant l'agencement de barrages s'étendant partiellement au-dessous du niveau de l'eau et partiellement au-dessus du niveau de l'eau afin de collecter l'énergie de la marée, l'énergie des vagues et l'énergie éolienne combinées.

15. Utilisation du dispositif selon l'une quelconque des revendications 1 à 11.
